# EUROPEAN PATENT APPLICATION

(11) **EP 4 618 218 A1**
(43) Date of publication of application: **17.09.2025**
(21) Application number: 24898945.1
(22) Date of filing: 29.09.2024
(51) Int. Cl.: H01M 10/0525, H01M 4/66, H01M 4/62, H01M 10/0587, H01M 4/02

(54) **ELECTRODE SHEET, JELLY ROLL, BATTERY AND PREPARATION METHOD FOR JELLY ROLL**

(30) Priority: 31.12.2023 CN 202323671291 U; 31.12.2023 CN 202311874122
(71) Applicant: Eve Energy Co., Ltd., Huizhou, Guangdong 516006 (CN)
(72) Inventor: LIU, Jincheng, Huizhou, Guangdong 516006 (CN); LIU, Liangliang, Huizhou, Guangdong 516006 (CN); ZHU, Yuan, Huizhou, Guangdong 516006 (CN)
(74) Representative: Berggren Oy
(86) International application number: PCT/CN2024/122128
(87) International publication number: WO 2025/139146

(57) **Abstract**

The present application provides an electrode sheet, a winding core, a battery and a preparation method for a winding core, which relate to the field of battery technology. The electrode sheet includes a current collector, an active material layer and a reinforcement layer. The current collector includes a tab and a main body, a side of the tab is connected to the main body; the active material layer is disposed on the main body; and the reinforcement layer is disposed at an end of the tab close to the main body.

## Description

The present application claims priority to Chinese patent applications Nos. 202323671291.0 and 202311874122.9 filed with Chinese Patent Office on December 31, 2023, the entire disclosures of which are incorporated by reference into the present application.

### TECHNICAL FIELD

The present application relates to the field of battery technology, and in particular to an electrode sheet, a winding core, a battery and a preparation method for the winding core.

### BACKGROUND

In the related art, a battery cell includes a housing and a positive electrode sheet, a separator and a negative electrode sheet which are stacked or disposed convolutely. The electrode sheet includes a current collector and an active material layer disposed on the current collector. The current collector includes a material area and a blank area located at A side of the material area. The active material layer is arranged in the material area, and the blank area is not provided with the active material layer. Usually, the blank area serves as a tab of the electrode sheet, and the tab includes a tab body and a tab root connecting the tab body with the main body.

### SUMMARY

Since a thickness of the current collector is relatively thin, it is easy to cause collapse and folding of the tab at the tab root during the process of winding the electrode sheet to form a winding core, resulting in poor reliability of the electrode sheet. Folding of the tab will cause the reduction in the yield rate of the winding core, resulting in the waste of the material.

The present application provides an electrode sheet, a winding core, a battery and a preparation method for winding core, which can remedy the problem of poor reliability of the electrode sheet.

In a first aspect, the present application provides an electrode sheet. The electrode sheet includes a current collector, an active material layer and a reinforcement layer. The current collector includes a tab and a main body, a side of the tab is connected to the main body; the active material layer is disposed on the main body; and the reinforcement layer is disposed at an end of the tab close to the main body.

In a second aspect, the present application also provides a winding core, including a positive electrode sheet, a separator and a negative electrode sheet that are stacked and disposed convolutely, where the positive electrode sheet is the aforementioned electrode sheet, or both the positive electrode sheet and the negative electrode sheet are the aforementioned electrode sheets.

In a third aspect, the present application also provides a battery, which includes the aforementioned winding core.

In a fourth aspect, the present application also provides a preparation method for a winding core, which includes: obtaining the aforementioned electrode sheet for winding, or obtaining the aforementioned winding core.

### Advantageous Effect

In the present application, by providing a reinforcement layer at an end of the tab close to the main body, the thickness size at the tab root can be increased, thereby causing increase in the strength of the tab root, and further, when the electrode sheet is wound, the tab can be effectively prevented from collapsing and folding, thereby ultimately improving the reliability of the electrode sheet.

### DESCRIPTION OF THE DRAWINGS

FIG.1 is a schematic structure diagram viewed from a cutting surface of an electrode sheet provided by an embodiment of the present application;
FIG.2 is an enlarged view at point A in FIG. 1;
FIG.3 is a schematic position diagram of the reinforcement layer on the A side and the reinforcement layer on the B side of the electrode sheet provided by an embodiment of the present application;
FIG.4 is a schematic structural diagram of the A side of the electrode sheet provided by an embodiment of the present application;
FIG.5 is a schematic structural diagram of the B side of the electrode sheet provided by an embodiment of the present application;
FIG.6 is a schematic structural diagram of the reinforcement layer provided by an embodiment of the present application;
FIG.7 is a schematic structural diagram of another reinforcement layer provided by an embodiment of the present application;
FIG.8 is a schematic structural diagram of a winding core viewed from a cutting surface of the electrode sheet provided by an embodiment of the present application;
FIG.9 is an enlarged view at point C in FIG.8;
FIG.10 is a schematic flow diagram 1 for preparing a winding core provided by an embodiment of the present application;
FIG.11 is a schematic flow diagram 2 for preparing a winding core provided by an embodiment of the present application;
FIG.12 is a schematic flow diagram 3 for preparing a winding core provided by an embodiment of the present application.

Description of reference numbers:
001-Electrode sheet;
011-Current collector; 111-Tab; 112-Main body;
012-Active material layer; 013-Reinforcement layer; 131-First adhesive layer; 132-Expansion layer; 134-Second adhesive layer; 135-PI layer;
002-Positive electrode sheet; 003-Separator; 004-Negative electrode sheet.

### DETAILED DESCRIPTION

Before introducing an electrode sheet, a winding core, a battery and a preparation method for the winding core of the present application, the relevant art of the present application is firstly introduced.

In the related art, since the thickness of the current collector of the electrode sheet is relatively thin, it is easy to incur the folding phenomena of the tab during the process of winding the electrode sheet with the tab and subsequently making it to form a finished battery cell by performing multiple operations, thereby causing a reduction in the yield rate of the electrode sheet and resulting in the waste of the material.

Based on this, a smoothing plate that can smooth the electrode sheet is usually provided to prevent the tab from folding. However, the smoothing plate needs to be provided at different positions for different electrode sheets, which has poor versatility and use of the smoothing plate readily results in the damages such as cracking of the electrode sheet.

As multi-tab and full-tab solutions become more and more popular, coating with an insulating layer has become a necessary measure to improve the reliability of the electrode sheet. However, in the full-tab solution, the coating process is limited and it is impossible to coat insulating layers having different widths, which results in limitation of the ability of the insulating layer to protect the electrode sheet and still poses the risk of tab folding.

Based on this, the embodiments of the present application provide an electrode sheet, a winding core, a battery and a preparation method for the winding core to remedy the problem of poor reliability of the electrode sheet. The present application describes the electrode sheet, the winding core, the battery and the preparation method for the winding core respectively through the following embodiments.

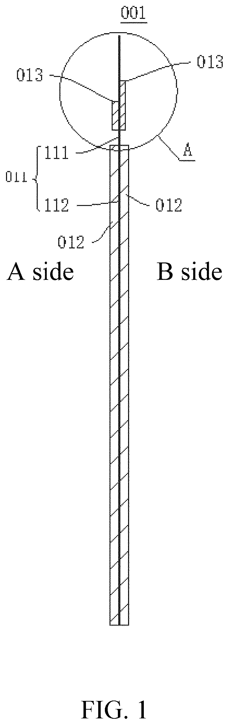

Please refer to FIG. 1, which is a schematic structural diagram viewed from the cutting surface of an electrode sheet 001 provided by an embodiment of the present application. An embodiment of the present application provides an electrode sheet 001, which is applied to a winding core. The electrode sheet 001 includes a current collector 011, an active material layer 012 and a reinforcement layer 013. The current collector 011 includes a tab 111 and a main body 112. A side of the tab 111 is connected to the main body 112. The active material layer 012 is disposed on the main body 112. The reinforcement layer 013 is disposed at an end of the tab 111 close to the main body 112.

It may be understood that the active material layer 012 covers the main body 112. The tab 111 includes a tab main body and a tab root connecting the tab main body to the main body 112. The reinforcement layer 013 is disposed at an end of the tab 111 close to the main body 112, and the reinforcement layer 013 may be disposed only at the tab root, or a part thereof is located at the tab root and a part thereof is located at the tab main body 112.

The reinforcement layer 013 is used to strengthen the strength of the end of the tab 111 close to the main body 112. The reinforcement layer 013 has an insulating property. The reinforcement layer 013 includes but is not limited to an insulating layer and an adhesive layer.

In the present embodiment, by providing a reinforcement layer 013 at an end of the tab 111 close to the main body 112, the thickness size of the tab root may be increased, thereby increasing the strength of the tab root, and further effectively preventing the tab from collapsing and folding of the tab when the electrode sheet 001 is wound, and ultimately improving the reliability of the electrode sheet 001. As a result, the yield rate of the spiral winding core using the electrode sheet 001 can be improved, and the manufacturing cost of the spiral winding core can be controlled.

In addition, a material with a strength greater than that of the current collector 011 may be selected as the reinforcement layer 013. As such, it is possible that the reinforcement layer 013 may improve the strength of the tab root at a smaller thickness.

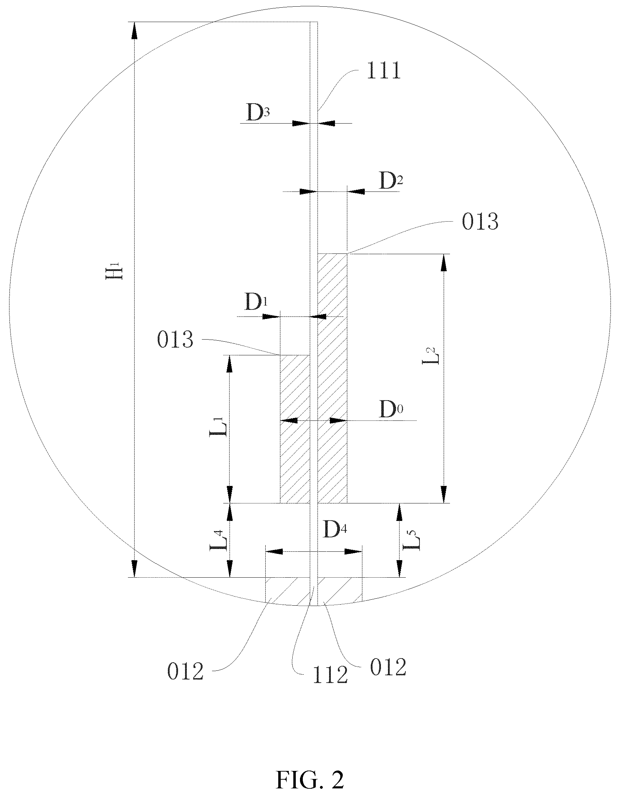

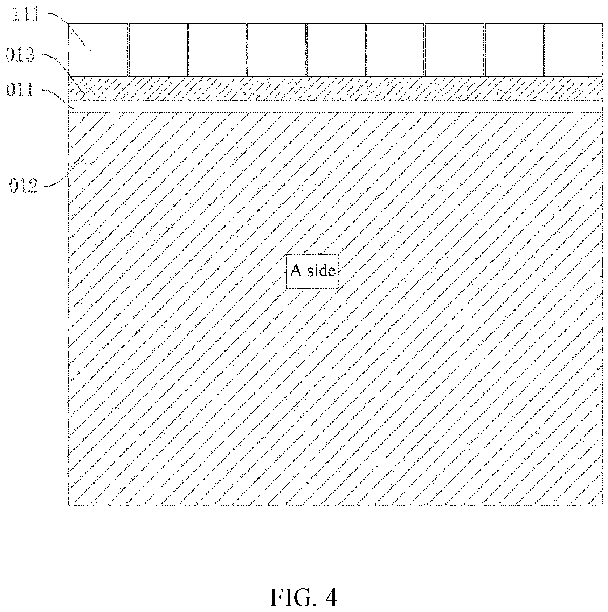

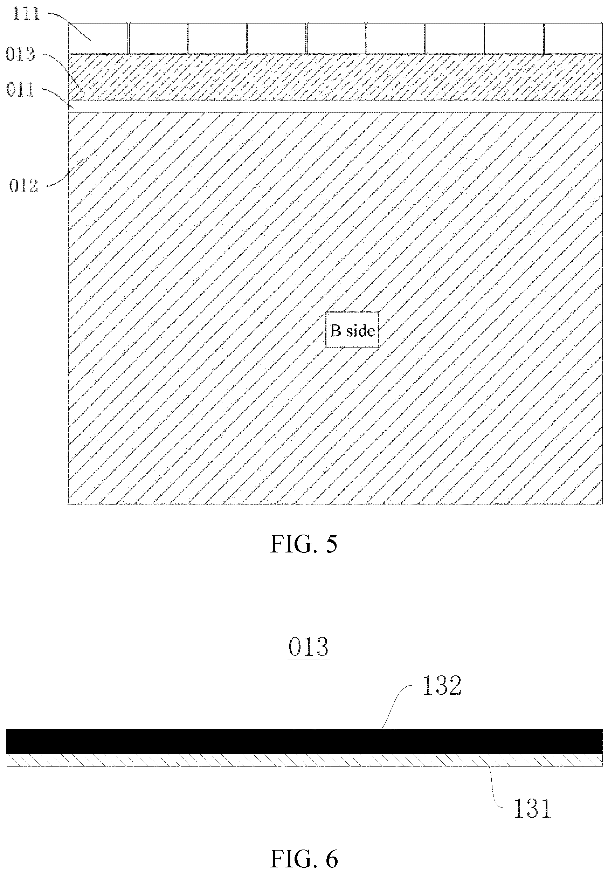

Please refer to FIG. 2, which is an enlarged view at point A in FIG. 1. In an embodiment, a winding center is defined, and the electrode sheet 001 has an A side facing the winding center and a B side away from the winding center, and both the A side and the B side are provided with a reinforcement layer 013 and an active material layer 012. As shown in FIGS. 4 and 5, FIG. 4 is a schematic structural diagram of the A side of the electrode sheet 001 provided by the embodiment of the present application, and FIG. 5 is a schematic structural diagram of the B side of the electrode sheet 001 provided by the embodiment of the present application.

In the present embodiment, by providing a reinforcement layer 013 at both sides of the tab 111, both sides of the tab can be strengthened at the same time, thereby improving the symmetry of the strengthening on both sides of the tab root, which may further improve reliability.

Please refer to FIG. 2. In an embodiment, along the width direction of the electrode 001, the reinforcement layer 013 on the A side has a width dimension L₁. The reinforcement layer 013 on the B side has a width dimension L₂. The tab 111 has a width dimension H1, satisfying: 15%H ₁ ≤L ₁ ≤50%H ₁, 15%H₁ ≤L₂ ≤50%H₁.

It can be understood that L₁ and L₂ include but are not limited to 15% H₁, 20% H₁, 30% H₁, 40% H₁, 45% H₁, 50% H₁. For example, when H₁ is 6.5 mm, L₁ and L₂ include but are not limited to 0.975 mm, 1.3 mm, 1.95 mm, 2.6 mm, 2.925 mm, and 3.25 mm.

In addition, L₁ may be equal to L₂, or L₁ may be unequal to L₂. When L₁ and L₂ are equal, they may be disposed in alignment on both sides of the tab, or they may be arranged in a staggered manner. When L₁ and L₂ are unequal, one end face of the reinforcement layer 013 on the A side may be flush with one end face of the reinforcement layer 013 on the B side in the width direction of the electrode sheet 001.

In the present embodiment, by making the above-mentioned limitation on L₁ and L₂, on one hand, it may avoid L₁ and L₂ from being too small to support the tab, and on the other hand, it may avoid L₁ and L₂ from being too large, which is not conducive to winding and electrical connection with the busbar.

In an embodiment, the following conditions are satisfied: L₁ <L₂, and 30%H ₁ ≤L₂ ≤50%H₁.

Illustratively, 50% L ₂ ≤ L₁ ≤ 90% L₂.

It can be understood that L₁ includes but is not limited to 50%L₂, 60% L₂, 70% L₂, 80% L₂, 86% L₂, 90%L₂. For example, when L₂ is 2.5mm, L₁ includes but is not limited to 1.25mm, 1.5mm, 1.75mm, 2mm, 2.15mm, 2.25mm.

Correspondingly, in combination with the previous embodiment, 15%H₁ ≤L₁ ≤45%H₁, 30%H₁ ≤L ₂ ≤50%H₁. L₁ includes but is not limited to 15%H₁, 20%H₁, 30%H₁, 40%H₁, 45%H₁. L ₂ includes but is not limited to 30%H₁, 36%H₁, 38%H₁, 40%H₁, 45%H₁, 50%H₁. For example, when H₁ is 6.5 mm, L₁ includes but is not limited to 0.975 mm, 1.3 mm, 1.95 mm, 2.6 mm, 2.925 mm, and L ₂ includes but is not limited to 1.95 mm, 2.34 mm, 2.47 mm, 2.6 mm, 2.925 mm, 3.25 mm.

It may be understood that, since the A side faces the winding center, it is in an extruded state when winding the electrode sheet 001; the B side faces away from the winding center, and it is in a stretched state when winding the electrode sheet 001. Therefore, in the present embodiment, the width dimension L1 of the reinforcement layer 013 on the A side is set to be smaller than the width dimension L2 of the reinforcement layer 013 on the B side, so that the area of the connection surface between the A side and the reinforcement layer 013 is smaller. As such, when winding the electrode sheet 001, the obstacle of the reinforcement layer 013 on the A side to the bending of the electrode sheet 001 may be reduced, which is conducive to the smooth winding process of the electrode sheet 001.

Please refer to FIG. 2, In an embodiment, the reinforcement layer 013 on the A side has a thickness dimension D₁ along the thickness direction of the electrode sheet 001, and the reinforcement layer 013 on the B side has a thickness dimension D₂, satisfying: D₁ >D₂.

Exemplarily, 40%D ₁ ≤D ₂ ≤80%D₁.

It may be understood that D₂ includes but is not limited to 40% D₁, 50% D₁, 60% D₁, 70% D₁, 75% D₁, 80% D₁. For example, when D₁ = 0.05 mm, D₀ includes but is not limited to 0.02 mm, 0.025 mm, 0.03 mm, 0.035 mm, 0.04 mm.

Since L₁ is smaller than L₂, the support effect of the reinforcement layer 013 on the A side on the tab is weaker than the strengthening effect of the reinforcement layer 013 on the B side on the tab. Based on this, in the present embodiment, by setting the thickness dimension D1 of the reinforcement layer 013 on the A side to be greater than the thickness dimension D₂ of the reinforcement layer 013 on the B side, the thickness of the reinforcement layer 013 on the A side may be increased, thereby improving the strengthening effect of the reinforcement layer 013 on the A side on the tab, and finally achieving stable support of the reinforcement layer 013 on the A side on the tab root.

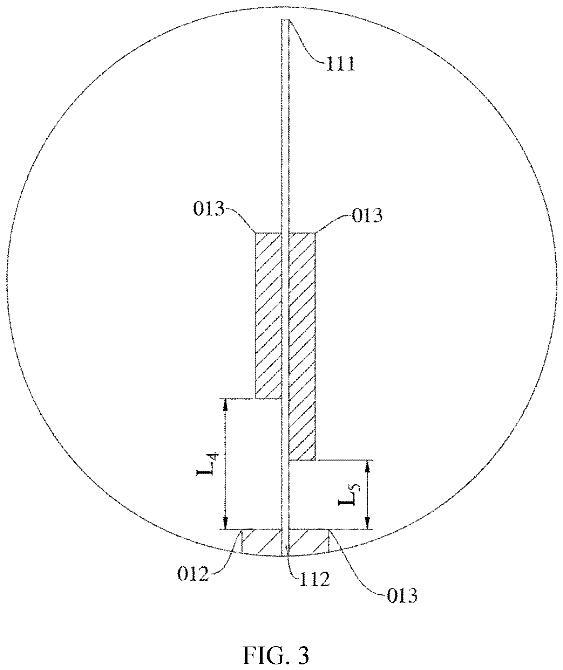

In an embodiment, the electrode sheet 001 is a positive electrode sheet, and the side of the reinforcement layer 013 away from the active material layer 012 on the A side is coplanar with the side of the reinforcement layer 013 away from the active material layer 012 on the B side. As shown in FIG. 3. FIG. 3 is a schematic position diagram of the reinforcement layer 013 on the A side and the reinforcement layer 013 on the B side of the electrode 001 provided by an embodiment of the present application.

In the present embodiment, through the above arrangement, the reinforcement layer 013 on the A side 013 and the B side of the electrode sheet 001 can share a positioning reference, thereby improving the convenience of disposing the reinforcement layer 013 and in turn improving the manufacturing efficiency of the electrode sheet 001.

Please refer to FIG. 3, in an embodiment, on the A side, the reinforcement layer 013 is spaced apart from the edge of the main body 112, and the spacing distance between the reinforcement layer 013 and the edge of the main body 112 is L₄; on the B side, the reinforcement layer 013 is spaced apart from the edge of the main body 112, and the spacing distance between the reinforcement layer 013 and the edge of the main body 112 is L₅, satisfying: L₄ > L₅.

In this embodiment, through the above-mentioned limitation, the spacing distance between the reinforcement layer 013 on the A side of the electrode sheet 001 and the edge of the main body 112 is larger than that on the B side, so that the support of the reinforcement layer 013 on the A side for the tab on the A side is weaker than the support of the reinforcement layer 013 on the B side for the tab on the B side. As a result, when winding the electrode sheet 001, the tab can be more easily bent toward the center of the winding core to achieve directional bending of the tab, which can ultimately facilitate the subsequent connection of the tab with the busbar.

Please refer to FIG. 2. In an embodiment, along the width direction of the electrode sheet 001, the reinforcement layer 013 on the A side has a width dimension L₁, satisfying: 15% L ₁ ≤_{L4} ≤ 27% L ₁.

Exemplarily, 0.25 mm ≤ L₅ < L₄ ≤ 1.5 mm, for example, L ₄ = 0.7 mm, L ₅ = 0.5 mm; L ₄ = 0.5 mm, L ₅ = 0.3 mm; L ₄ = 0.38 mm, L ₅ = 0.2 mm.

In the present embodiment, by limiting the spacing distance L4 between the reinforcement layer 013 on the A side and the edge of the main body 112. On one hand, it may avoid the distance between the reinforcement layer 013 and the edge of the main body 112 being too small, thereby avoiding the active material layer 012 under compression and the reinforcement layer 013 in the A side from interfering with each other due to deformation. On the other hand, it may avoid the spacing distance between the reinforcement layer 013 and the edge of the main body 112 being too large to strengthen the tab root.

In addition, by limiting the minimum value of L₄, the minimum value of the spacing distance between the reinforcement layer 013 on the A side and the edge of the main body 112 may be limited, thereby ensuring that the electrode sheet has guidance when winding, and in turn improving the smoothness of winding.

Please refer to FIG.2, In an embodiment, along the thickness direction of the electrode sheet 001, the electrode sheet 001 has a thickness dimension D₄ at the active material layer 012. The electrode sheet 001 has a thickness dimension D ₀ at the reinforcement layer 013, satisfying: 50% D₄ ≤ D ₀ ≤ 90% D₄.

It may be understood that in the present art, along the thickness direction of the electrode sheet 001, the spacing distance between the surface of the active material layer 012 on A side of the current collector 011 and the surface of the active material layer 012 at the other side of the current collector 011 is the thickness dimension D ₄ of the electrode sheet 001 at the active material layer 012. In addition, the spacing distance between the surface of the reinforcement layer 013 at A side of the current collector 011 and the surface of the reinforcement layer 013 at the other side of the current collector 011 is the thickness dimension D ₀ of the electrode sheet 001 at the reinforcement layer 013.

D ₀ includes but is not limited to 50% D ₄, 60% D ₄, 70% D ₄, 80% D ₄, 90% D ₄. For example, when D ₄ = 0.124 mm, D₀ includes but is not limited to 0.062 mm, 0.08 mm, 0.09 mm, 0.10 mm, 0.116 mm.

In an embodiment, the reinforcement layer 013 includes a first adhesive layer 131 disposed on the tab 111. Specifically, the first adhesive layer 131 is a thermosetting binder or a UV curing adhesive or a mixture of a UV curing adhesive and an insulating filler.

It may be understood that the thermosetting binder is a thermosetting resin, and the thermosetting resin may be at least one of phenolic resin, urea-formaldehyde resin, melamine-formaldehyde resin, epoxy resin, silicone resin, polyurethane, and polyimide. The UV curable adhesive is a UV curable resin. The UV curable resin is at least one of epoxy acrylate, polyacrylic acid, polyester acrylate, acrylate containing a vinyl nitrile functional group, and silicone/fluorine light curing resin. The thermosetting binder or UV curable adhesive usually have a faster curing time, so that the reinforcement layer 013 may be quickly cured and strongly bonded to the tab. As such, it is possible to save the waiting time for the glue to cure and in turn improve production efficiency.

In the present embodiment, by using the above-mentioned adhesive, on one hand, the tab of the electrode sheet 001 may be pre-folded during winding, and the reinforcement layer 013 may be cured, thereby improving the supporting effect of the reinforcement layer 013 on the tab, and in turn effectively preventing the tab from collapsing and folding. As such, it is possible to improve the yield rate of the winding assembly and controlling the manufacturing cost of the winding assembly; on the other hand, the first adhesive layer 131 may have a faster curing time, so that the first adhesive layer 131 may be quickly cured and strongly bonded to the tab. In this way, not only the connection process between the curing layer and the tab is more convenient, but also the time required for curing the first adhesive layer 131 may be saved, and the production efficiency may be improved.

Please refer to FIG. 6, which is a schematic structure diagram of the reinforcement layer 013 provided by an embodiment of the present application. In an embodiment, the reinforcement layer 013 further includes an expansion layer 132, and the expansion layer 132 is disposed on A side of the first adhesive layer 131 away from the tab 111.

It may be understood that the expansion layer 132 is an expansion tape.

In the present embodiment, when the battery cell is assembled and then a liquid is injected, the expansion layer 132 expands to fill the gap at the edge between the positive electrode sheet 002 and the negative electrode sheet 004. In this way, it is not only possible that the positive electrode sheet 002 and the negative electrode sheet 004 are insulated and isolated, but also possible that the tab and the edge of the separator 003 are abutted tightly to make them become a whole, thereby increasing the vibration resistance strength at the tab to reduce the shaking amplitude at the tab during impact, which in turn effectively reduces the possibility of internal short circuit caused by external impact, and may ultimately improve the safety and reliability of the battery.

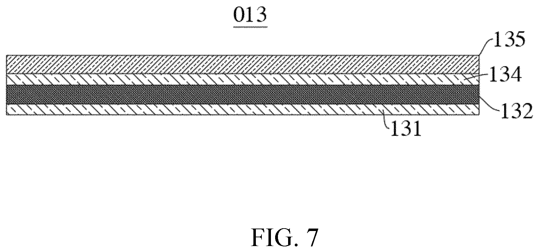

Please refer to FIG. 7, which is a schematic structure diagram of another reinforcement layer 013 provided by an embodiment of the present application. In an embodiment, along the direction away from the tab, the reinforcement layer 013 includes a first adhesive layer 131, an expansion layer 132, a second adhesive layer 134 and a PI (Polyimide) layer 135 disposed in sequence. The PI layer 135 is disposed on the side of the expansion layer 132 away from the first adhesive layer 131 via the second adhesive layer 134. The second adhesive layer 134 includes but is not limited to UV curable resin and acrylic glue. Specifically, the second adhesive layer 134 is a thermosetting binder or a UV curable adhesive or a mixture of a UV curable adhesive and an insulating filler.

In the present embodiment, through the above configuration, on one hand, it is possible to improve the insulation property of the reinforcement layer 013, thereby improving the reliability; on the other hand, it is possible to improve the strength of the reinforcement layer 013 so as to avoid the reinforcement layer 013 from being scratched by the burrs at the tab.

In an embodiment, taking a 4680 cylindrical battery cell and the electrode 001 as the positive electrode as an example, the involved dimensions and values are as follows:

### [Table 1_sm_0001]

**Table 1. A table of Dimensions and values**

| Parameter | Meaning | Value/mm |
|---|---|---|
| L₁ | Width of the A-side reinforcement layer 013 | 2.000 |
| L₂ | Width of the B-side reinforcement layer 013 | 2.500 |
| L₃ | Width of the cutting tag | 3.000 |
| L₄ | The spacing distance between the A-side reinforcement layer 013 and the edge of the main body 112 | 0.45 |
| L₅ | The spacing distance between the B-side reinforcement layer 013 and the edge of the main body 112 | 0.300 |
| H₁ | Width of tab 111 | 6.5 |
| D₁ | Thickness of the A-side reinforcement layer 013 | 0.050 |
| D₂ | Thickness of the B-side reinforcement layer 013 | 0.035 |
| D₃ | Thickness of the current collector 011 | 0.012 |
| D₄ | Thickness of the electrode sheet 001 | 0.124 |

In Table 1, Width L₃ of the cutting tab on the A side = the width H₁ of the tab 111 - the width L₁ of the A-side reinforcement layer 013 - the spacing distance L₄ between the A-side reinforcement layer 013 and the edge of the main body 112; the width L₃ of the cutting tab on the B side = the width H₁ of the tab 111 - the width L₂ of the B side reinforcement layer 013 - the spacing distance L₅ between the B side reinforcement layer 013 and the edge of the main body 112.

In addition, the width of the cutting tab in Table 1 refers to the cutting size of the tab formed by cutting the blank area of the current collector.

Correspondingly, an embodiment of the present application further provides a winding core, including a positive electrode sheet 002, a separator 003 and a negative electrode sheet 004 that are disposed convolutely, where the positive electrode sheet 002 is the electrode sheet 001 disclosed in some embodiments of the present application, or the positive electrode sheet 002 and the negative electrode sheet 004 are both the electrode sheet 001 disclosed in some embodiments of the present application.

It may be understood that, based on the battery design, the negative electrode sheet 004 should completely wrap the positive electrode sheet 002. In order to prevent the tab of the positive electrode sheet 002 from bending, at least the structure of the positive electrode sheet 002 should be the structure of the electrode sheet 001 disclosed in some embodiments of the present application.

In this embodiment, by adopting the electrode sheet 001 disclosed in some embodiments of the present application as the positive electrode sheet 002 of the winding core, the thickness size of the tab root can be increased, thereby increasing the strength of the tab root. Furthermore, when the positive electrode sheet 002 is wound, the tab of the positive electrode sheet 002 can be prevented from bending at the tab root to avoid folding of the tab, thereby ultimately improving the yield rate of the winding core and controlling the manufacturing cost of the winding core.

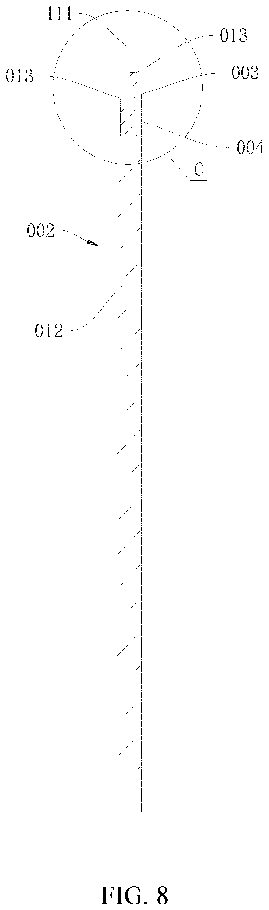

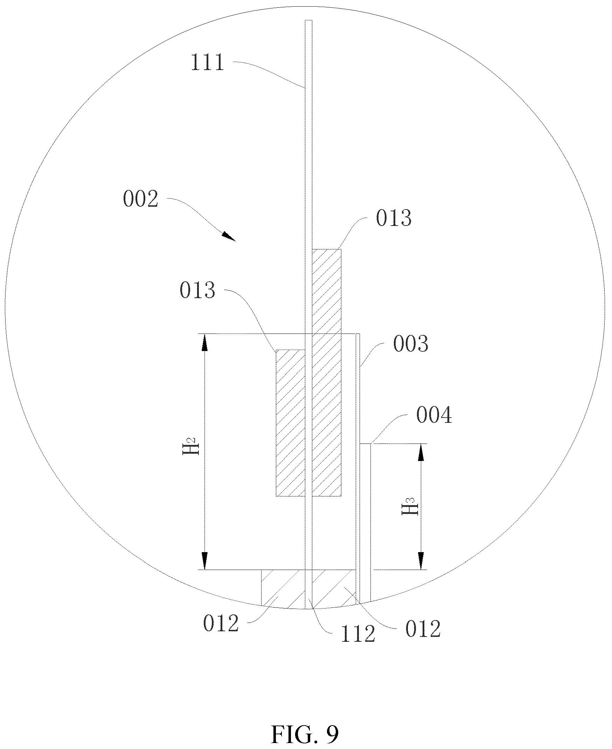

Please refer to FIGS. 8 and 9, FIG. 8 is a schematic structure diagram of the winding core viewed from the cutting surface of the electrode sheet 001 provided by the embodiment of the present application, and FIG. 9 is an enlarged view at point C in FIG. 8. In an embodiment, the winding core has a winding center, and the surface of the positive electrode sheet 002 facing the winding center is the A side. Along the width direction of the positive electrode sheet 002, the A side reinforcement layer 013 has a first end face towards the active material layer 012 on the A side and a second end face away from the active material layer 012 on the A side. Taking the plane parallel to the winding center as the projection plane and the direction perpendicular to the projection plane as the projection direction, the orthographic projection of the edge of the negative electrode sheet 004 is located between the orthographic projection of the first end face and the orthographic projection of the second end face in the projection plane.

In FIG. 9, a dimension by which the edge of the negative electrode sheet 004 exceeds the edge of the main body 112 of the positive electrode sheet 002 is H₃, and the spacing distance between the first end face and the edge of the main body 112 of the positive electrode sheet 002 is L₄. Correspondingly, L₄ <H₃.

Exemplarily, L₄ is 0.7 mm and H₃ is 1 mm.

In the present embodiment, through the above-mentioned limitations, the reinforcement layer 013 can not only protect the tab of the positive electrode sheet 002 from folding, but also prevent the edge of the negative electrode sheet 004 from being stuck in the spacing between the first end face and the edge of the main body 112 of the positive electrode sheet 002, thereby preventing the edge of the negative electrode sheet from being stuck in the spacing to cause a short circuit, which may in turn improve the reliability of the winding core.

Please refer to FIG. 9. In an embodiment, the orthographic projection of the edge of the separator 003 is located between the orthographic projection of the second end face and the orthographic projection of the edge of the main body 112 of the negative electrode sheet 004 in the projection plane.

It may be understood that the tab of the positive electrode sheet 002 and the tab of the negative electrode sheet 004 are respectively located at the two ends of the winding center, and the sheet edge of the negative electrode sheet 004 close to the tab of the positive electrode sheet 002 is the edge of the main body of the negative electrode sheet 004. Therefore, the spacing between the second end face and the edge of the main body 112 of the negative electrode sheet 004 is disposed opposite to the edge of the separator 003, so that the insulation isolation between the negative electrode sheet 004 and the positive electrode sheet 002 can be achieved.

The surface of the positive electrode sheet 002 that is away from the winding center is the B side. In the B side, as shown in FIG.9, along the width direction of the positive electrode sheet 002, the spacing distance between the second end face and the edge of the main body 112 of the positive electrode sheet 002 = the width dimension L₂ of the reinforcement layer 013 of the B side + the spacing distance L5 between the reinforcement layer 013 of the B side and the edge of the main body 112 of the B side. Along the width direction of the positive electrode sheet 002, the dimension by which the edge of the separator 003 exceeds the edge of the main body 112 of the positive electrode sheet 002 is H₂. The orthographic projection of the edge of the separator 003 is located between the orthographic projection of the second end face and the orthographic projection of the edge of the main body 112 of the negative electrode sheet 004, and accordingly, L ₅ <H ₂ <L ₅ +L ₂.

Exemplarily, L₅ is 0.3 mm, L₂ is 2.5 mm, and correspondingly, 0.3 mm<H₂ <2.8 mm, for example, H₂ = 2 mm.

In the present embodiment, through the above-mentioned limitation, the edge of the separator 003 is disposed opposite to the reinforcement layer 013, so that in the spiral winding core, the gaps between the tab of the positive electrode sheet 002, the edge of the separator 003 and the edge of the negative electrode sheet 004 may be filled by the reinforcement layer 013, thereby making the edges of these three components become an integral body, which in turn improves the structural stability of the winding core.

In addition, when the reinforcement layer 013 includes an expansion layer, it is possible that the expansion layer expands when the battery cell is assembled and then the liquid is injected, so that the gap between the tab of the positive electrode sheet 002 and the edge of the negative electrode sheet 004 may be filled, so as to squeeze the edge of the separator 002, the edge of the negative electrode sheet 004, the tab of the positive electrode sheet 002 and the expansion layer 132 into an integral body at the opposite positions. In this way, it is not only possible that the positive electrode sheet 002 and the negative electrode sheet 004 are insulated and isolated, but also possible that the tab of the positive electrode sheet 002, the edge of the negative electrode sheet 004 and the edge of the separator 003 are abutted tightly to make them become an integral body, so that the vibration resistance strength at the tab is increased to reduce the shaking amplitude between them during impact, which may in turn effectively prevent the possibility of internal short circuit caused by external impact, and finally can improve the safety and reliability of the battery .

Accordingly, embodiments of the present application also provide a battery, which includes the winding core disclosed in some embodiments of the present application.

It may be understood that the battery further includes a battery box and a cell shell disposed in the battery box. The winding core is disposed in the cell shell, and an electrolyte is injected into the cell shell.

In the present embodiment, by adopting the winding core disclosed in some embodiments of the present application, the yield rate of the battery is made improved, thereby controlling the manufacturing cost of the battery.

Correspondingly, an embodiment of the present application also provides a preparation method for a winding core, and the preparation method for a winding core includes: obtaining the electrode sheet 001 disclosed in some embodiments of the present application for winding, or obtaining the winding core disclosed in some embodiments of the present application.

In the present embodiment, by adopting the electrode sheet 001 or the winding core disclosed in some embodiments of the present application, the tab 111 of the electrode sheet 001 may be avoided from collapsing or folding during winding, thereby improving the yield of the winding assembly and controlling the manufacturing cost of the winding assembly.

In an embodiment, the reinforcement layer 013 includes a first adhesive layer 131 disposed on the electrode sheet, and the method includes: disposing the first adhesive layer 131 at an end of the tab 111 of the electrode sheet 001 close to the main body 112; pre-folding the tab 111 of the electrode sheet 001 during winding, and performing a curing treatment on the first adhesive layer 131 on the pre-folded tab 111 of the electrode sheet 001.

Exemplarily, the first adhesive layer 131 is a thermosetting binder or a UV curing adhesive or a mixture of a UV curing adhesive and an insulating filler. The insulating filler may be ceramic powder.

In this way, the tab of the positive electrode sheet 002 may be bent and shaped in a preset direction, thereby making possible to improve the strength of the tab and further avoid the tab of the positive electrode sheet 002 from collapsing or folding.

When the first adhesive layer 131 is a thermosetting binder, the reinforcement layer 013 is cured by heating the reinforcement layer 013; when the first adhesive layer 131 is a UV curing adhesive or a mixture of a UV curing adhesive and an insulating filler, the reinforcement layer 013 is cured by irradiating it with UV rays through a UV curing device.

In an embodiment, before pre-folding the tab 111 of the electrode sheet 001, the method further includes: baking the reinforcement layer 013.

In the present embodiment, the reinforcement layer 013 is initially solidified by baking the reinforcement layer, so as to control the adhesion of the reinforcement layer 013 and avoid it from being randomly bonded to other components, thereby facilitating enhancement in the smooth preparation of the winding core.

In an embodiment, the reinforcement layer 013 further includes an expansion layer 132. After the first adhesive layer 131 is disposed at an end of the tab 111 of the electrode sheet 001 close to the main body 112, the method further includes: disposing the expansion layer 132 on A side of the first adhesive layer 131 away from the tab 111.

In the present embodiment, by providing the expansion layer 132, it is possible that the expansion layer expands when the battery cell is assembled and the liquid is injected, so that the gap between the tab of the positive electrode sheet 002 and the edge of the negative electrode sheet 004 may be filled, so as to squeeze the edge of the separator 002, the edge of the negative electrode sheet 004, the tab of the positive electrode sheet 002 and the expansion layer 132 into an integral body at the corresponding positions. In this way, it is not only possible that the positive electrode sheet 002 and the negative electrode sheet 004 are insulated and isolated, but also possible that the tab of the positive electrode sheet 002, the edge of the negative electrode sheet 004 and the edge of the separator 003 are abutted tightly to make them become an integral body, so that the vibration resistance strength at the tab is increased to reduce the shaking amplitude between them during impact, which may in turn effectively prevent the possibility of internal short circuit caused by external impact, and can finally improve the safety and reliability of the battery .

In an embodiment, the reinforcement layer 013 further includes a second adhesive layer 134 and a PI layer 135. After the expansion layer 134 is disposed on the side of the first adhesive layer 131 away from the tab 111, the method further includes: disposing the second adhesive layer 134 on the side of the expansion layer 132 away from the first adhesive layer 131; and disposing the PI layer 135 on the side of the second adhesive layer 134 away from the expansion layer 132.

In the present embodiment, through the above configuration, on one hand, the insulation of the reinforcement layer 013 can be enhanced, thereby improving the reliability; on the other hand, the strength of the reinforcement layer 013 can be enhanced to avoid the reinforcement layer 013 from being scratched by the burrs at the tab.

In an embodiment, the method further includes: preparing and baking a reinforcement layer 013; disposing the baked reinforcement layer 013 at an end of the tab 111 of the electrode sheet 001 close to the main body 112; during winding, pre-folding the tab 111 of the electrode sheet 001, and performing a curing treatment of the reinforcement layer 013 on the pre-folded tab 111.

The reinforcement layer 013 includes a first adhesive layer 131, an expansion layer 132, a second adhesive layer 134 and a PI layer 135 which are stacked and disposed in sequence.

In the present embodiment, the reinforcement layer 013 is prepared and then disposed on the tab 111 of the electrode sheet 001, so that the reinforcement layer 013 may be manufactured and the active material et al. is coated on the current collector 011 separately, thereby improving the manufacturing efficiency of the electrode sheet 011.

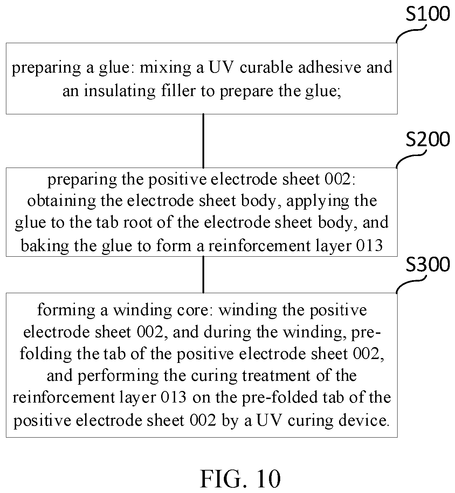

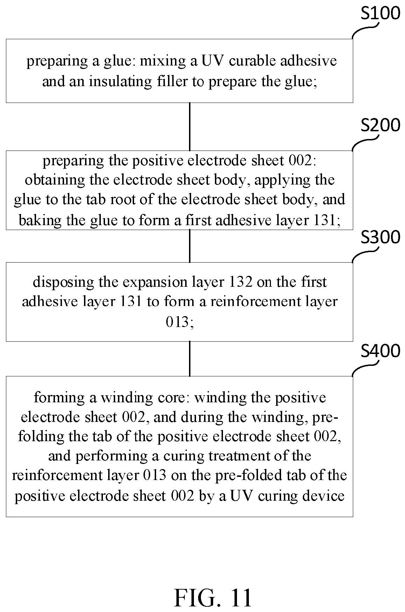

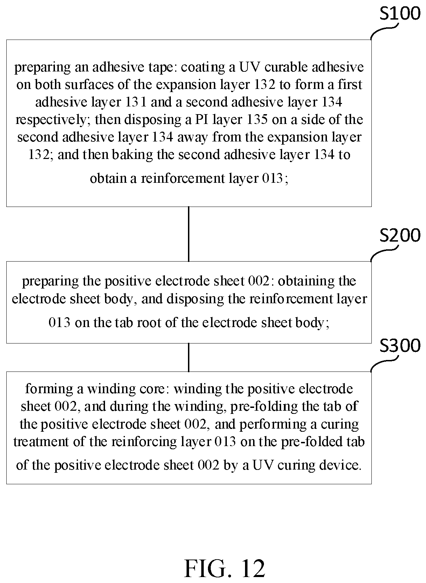

Based on the above embodiments, the preparation of the winding core is described in detail as follows.
1. When the reinforcement layer 013 includes the first adhesive layer 131, and the first adhesive layer 131 is a mixture of a UV curable adhesive and an insulating filler, as shown in FIG. 10, FIG. 10 is a schematic flow diagram 2 for preparing a winding core provided by an embodiment of the present application. The preparation method for the winding core includes:
   S100, preparing a glue: mixing a UV curable adhesive and an insulating filler to prepare the glue;
   S200, preparing the positive electrode sheet 002: obtaining the electrode body, applying the glue to the tab root of the electrode body, and baking the glue to form a reinforcement layer 013, that is, a first adhesive layer 131; it may be understood that when the reinforcement layer 013 has only the first adhesive layer 131, baking the reinforcement layer 013 is equivalent to baking the first adhesive layer 131;
   S300, forming a winding core: winding the positive electrode sheet 002, and during the winding, pre-folding the tab of the positive electrode sheet 002, and performing the curing treatment of the reinforcement layer 013 on the pre-folded tab of the positive electrode sheet 002 by a UV curing device.
2. When the reinforcement layer 013 includes the first adhesive layer 131 and the expansion layer 132, and the first adhesive layer 131 is a mixture of a UV curable adhesive and an insulating filler, as shown in FIG. 11, FIG. 11 is a schematic flow diagram 2 of preparing a winding core provided by an embodiment of the present application. The preparation method for the winding core includes:
   S100, preparing a glue: mixing a UV curable adhesive and an insulating filler to prepare the glue;
   S200, preparing the positive electrode sheet 002: obtaining the electrode sheet body, applying the glue to the tab root of the electrode sheet body, and baking the glue to form a first adhesive layer 131;
   S300, disposing the expansion layer 132 on the first adhesive layer 131 to form a reinforcement layer 013;
   S400, forming a winding core: winding the positive electrode sheet 002, and during the winding, pre-folding the tab of the positive electrode sheet 002, and performing a curing treatment of the reinforcement layer 013 on the pre-folded tab of the positive electrode sheet 002 by a UV curing device.
3. When the reinforcement layer 013 includes a first adhesive layer 131, an expansion layer 132, a second adhesive layer 134 and a PI layer 135, and the first adhesive layer 131 is a mixture of a UV curable adhesive and an insulating filler, as shown in FIG. 12, FIG. 12 is a schematic flow diagram 3 for preparing a winding core provided by an embodiment of the present application. The preparation method for the winding core includes:
   S100, preparing an adhesive tape: coating a mixture of a UV curable adhesive and an insulating filler on both surfaces of the expansion layer 132 to form a first adhesive layer 131 and a second adhesive layer 134 respectively; then disposing a PI layer 135 on A side of the second adhesive layer 134 away from the expansion layer 132; and then baking the second adhesive layer 134 to obtain a reinforcement layer 013;
   S200, preparing the positive electrode sheet 002: obtaining the electrode sheet body, and disposing the reinforcement layer 013 on the tab root of the electrode sheet body;
   S300, forming a winding core: winding the positive electrode sheet 002, and during the winding, pre-folding the tab of the positive electrode sheet 002, and performing a curing treatment of the reinforcement layer 013 on the pre-folded tab of the positive electrode sheet 002 by a UV curing device.

## Claims

1. A electrode sheet (001), comprising:
a current collector (011) comprising a tab (111) and a main body (112), wherein a side of the tab (111) is connected to the main body (112);
an active material layer (012), disposed on the main body (112);
a reinforcement layer (013), disposed at an end of the tab (111) close to the main body (112).

2. The electrode sheet (001) according to claim 1, wherein a winding center is defined, and the electrode sheet (001) has an A side towards the winding center and a B side away from the winding center; both the A side and the B side are provided with the reinforcement layer (013) and the active material layer (012).

3. The electrode sheet (001) according to claim 2, wherein, along a width direction of the electrode sheet (001), the reinforcement layer (013) on the A side has a width dimension L₁, the reinforcement layer (013) on the B side has a width dimension L₂, and the tab (111) has a width dimension H₁, satisfying: 15 % H₁≤L₁≤50% H₁, 15% H₁≤L₂≤50% H₁.

4. The electrode sheet (001) according to claim 3, wherein L₁ < L₂.

5. The electrode sheet (001) according to claim 4, wherein 50 % L₂≤L₁≤90 % L₂.

6. The electrode sheet (001) according to claim 5, wherein 15 % H₁ ≤ L₁ ≤ 45 % H₁.

7. The electrode sheet (001) according to any one of claims 4 to 6, wherein, along a thickness direction of the electrode sheet (001), the reinforcement layer (013) on the A side has a thickness dimension D₁, and the reinforcement layer (013) on the B side has a thickness dimension D2, satisfying: D₁ > D₂.

8. The electrode sheet (001) according to any one of claims 4 to 7, wherein the electrode sheet (001) is a positive electrode sheet (002), and 30% H₁ ≤L₂ ≤50% H₁.

9. The electrode sheet (001) according to any one of claims 4 to 8, wherein a side of the reinforcement layer (013) on the A side away from the active material layer (012) on the A side is coplanar with a side of the reinforcement layer (013) on the B side away from the active material layer (012) on the B side.

10. The electrode sheet (001) according to any one of claims 2 to 9, wherein, on the A side, the reinforcement layer (013) is spaced apart from an edge of the main body (112), and a spacing distance between the reinforcement layer (013) and the edge of the main body (112) is L₄; on the B side, the reinforcement layer (013) is spaced apart from the edge of the main body (112), and a spacing distance between the reinforcement layer (013) and the edge of the main body (112) is L₅, satisfying: L₄ > L₅.

11. The electrode sheet (001) according to claim 10, wherein, along a width direction of the electrode sheet (001), the reinforcement layer (013) on the A side has a width dimension L₁ satisfying: 15% L₁≤L₄≤27 % L₁.

12. The electrode sheet (001) according to claim 11, wherein 0.25 mm ≤ L₅ < L₄ ≤1.5 mm.

13. The electrode sheet (001) according to any one of claims 1 to 12, wherein, along a thickness direction of the electrode sheet (001), the electrode sheet (001) has a thickness dimension D₄ at the active material layer (012), and the electrode sheet (001) has a thickness dimension D₀ at the reinforcement layer (013), satisfying: 50 % D₄≤ D₀ ≤90 % D₄.

14. The electrode sheet (001) according to any one of claims 1 to 13, wherein the reinforcement layer (013) comprises a first adhesive layer (131) disposed on the tab (111).

15. The electrode sheet (001) according to claim 14, wherein the reinforcement layer (013) further comprises an expansion layer (132), and the expansion layer (132) is disposed on a side of the first adhesive layer (131) away from the tab (111).

16. The electrode sheet (001) according to claim 15, wherein the reinforcement layer (013) further comprises a second adhesive layer (134) and a PI layer (135), and the PI layer (135) is disposed on a side of the expansion layer (132) away from the first adhesive layer (131) via the second adhesive layer (134).

17. The electrode sheet (001) according to claim 16, wherein the first adhesive layer (131) and/or the second adhesive layer (134) is a thermosetting binder or a UV curing adhesive or a mixture of a UV curing adhesive and an insulating filler.

18. A winding core, comprising a positive electrode sheet (002), a separator (003) and a negative electrode sheet (004) that are disposed convolutely, wherein the positive electrode sheet (002) is the electrode sheet (001) according to any one of claims 1 to 17, or both the positive electrode sheet (002) and the negative electrode sheet (004) are the electrode sheet (001) according to any one of claims 1 to 17.

19. The winding core according to claim 18 , wherein a winding center is defined, A side of the positive electrode sheet (002) towards the winding center is an A side , and along a width direction of the positive electrode sheet (002), the reinforcement layer (013) on the A side has a first end face of the active material layer (012) towards the A side and a second end face of the active material layer (012) away from the A side; a plane parallel to the winding center is taken as a projection plane, and a direction perpendicular to the projection plane is taken as a projection direction, an orthographic projection of an edge of the main body (112) of the negative electrode sheet (004) is located between an orthographic projection of the first end face and an orthographic projection of the second end face in the projection plane.

20. The winding core according to claim 19, wherein, in the projection plane, the orthographic projection of an edge of the separator (003) is located between the orthographic projection of the second end face and an orthographic projection of the edge of the main body (112) of the negative electrode sheet (004).

21. A battery comprising the winding core according to any one of claims 18 to 20.

22. A preparation method for a winding core, comprising: obtaining the electrode sheet (001) as claimed in any one of claims 1 to 17 for winding, or obtaining the winding core as claimed in any one of claims 18 to 20.

23. The preparation method for the winding core according to claim 22, wherein the reinforcement layer (013) comprises a first adhesive layer (131), and the method comprises: disposing the first adhesive layer (131) at an end of the tab (111) of the electrode sheet (001) close to the main body (112) before winding the electrode sheet (001); during winding, pre-folding the tab (111) of the electrode sheet (001), and performing a curing treatment of the first adhesive layer (131) on the tab (111) of the electrode sheet (001) after pre-folding.

24. The preparation method for the winding core according to claim 23, wherein before pre-folding the tab (111) of the electrode sheet (001), the method further comprises: baking the reinforcement layer (013).

25. The preparation method for the winding core according to claim 23 or 24, wherein the reinforcement layer (013) further comprises an expansion layer (132), and after the first adhesive layer (131) is disposed at an end of the tab (111) of the electrode sheet (001) close to the main body (112), the method further comprises:
disposing the expansion layer (132) on a side of the first adhesive layer (131) away from the tab (111).

26. The preparation method for the winding core according to claim 25, wherein the reinforcement layer (013) further comprises a second adhesive layer (134) and a PI layer (135), and after the disposing the expansion layer (132) on a side of the first adhesive layer (131) away from the tab (111), the method further comprises:
disposing the second adhesive layer (134) on a side of the expansion layer (132) away from the first adhesive layer (131);
disposing the PI layer (135) on a side of the second adhesive layer (134) away from the expansion layer (132).

27. The preparation method for the winding core according to any one of claims 22 to 26, the method further comprising:
preparing and baking the reinforcement layer (013);
disposing the reinforcement layer (013) after baking at an end of the tab (111) of the electrode sheet (001) close to the main body (112);
during winding, pre-folding the tab (111) of the electrode sheet (001), and performing a curing treatment of the reinforcement layer (013) on the tab (111) after pre-folding.
